# EUROPEAN PATENT APPLICATION

(11) **EP 4 431 272 A1**
(43) Date of publication of application: **18.09.2024**
(21) Application number: 23162380.2
(22) Date of filing: 16.03.2023
(51) Int. Cl.: B32B 17/10

(54) **INTERLAYERS HAVING AN OBSCURATION AREA**

(71) Applicant: Kuraray Europe GmbH, 65795 Hattersheim (DE)
(72) Inventor: Lellig, Philipp, 50670 Köln (DE)
(74) Representative: Janßen, Christian Oliver

(57) **Abstract**

The present invention relates to an interlayer, especially for use in windshields, comprising at least two polyvinyl acetal films of which one is provided with an obscuration area with a further coating or film.

## Description

The present invention relates to an interlayer, especially for use in windshields, comprising at least two polyvinyl acetal films of which one is provided with an obscuration area with a further coating or film.

In most windshields for cars, one or both of the glass sheets is provided with a non-transparent, mostly black, frame to protect the sealing or the adhesive, which mechanically connects the windshield with the chassis, from UV radiation. A common technique is to print a low melting black glass frit on the glass surface and then sinter this frit at temperatures over 600 °C.

Applying of so called *"*black frit*"* with a sintering process is an established technology but it alters the heat absorption properties of the glass part at the position of the obscuration areas. This causes high temperature gradients in the glass part over short distances and thus, gives rise to strong local deviations from the intended geometry. Resulting bending flaws can worsen the visual appearance of the glazing part for driver and passengers looking through such a glazing part, or may even give rise to too strong local changes of optical refraction power (optical flaw). These flaws can lead to failures in the operation of optical devices positioned behind the windshield.

Such optical devices are usually mounted behind non-transparent obscuration areas to avoid stray light and to cover the devices form being seen form outside of the vehicle. Such obscuration areas for windscreens made form *"*black frit*"* provided with cameras as optical sensors are for example disclosed in US20160243796.

In order to avoid such optical flaws, WO2019121535A1 discloses that the obscuration areas are printed or coated onto a thin, rather stiff polyvinyl butyral (PVB) film which is used with a standard plasticized PVB film for laminated glass. For improved adhesion, the obscuration area is preferably oriented towards the standard plasticized PVB film in order to avoid issues with the adhesion resulting from certain constituents of the ink used to obtain the obscuration area.

However, it has now been found that this orientation of the usually black obscuration area towards the standard PVB film leads to a decrease in optical quality of said obscuration area. Standard PVB films for windshield applications generally have a rough surface pattern obtained for examples by embossing the film surface during production. This surface pattern allows the air to leave the stack comprising glass sheets and PVB films during lamination and thus, avoids air bubbles in the final laminated glass. This surface pattern disappears from the surface of the plasticized PVB film during the high-temperature lamination step. However, it can still be found to some extend as surface pattern in the obscuration area after lamination. In other words, the surface pattern is pressed into the surface of the printed or coated ink surface of the thin PVB film, leading to an uneven appearance of the usually black area in the final laminate.

Accordingly, it was an objective of the present invention to provide interlayers for laminated glass, especially for windshields, leading to obscuration areas with improved properties, especially with an improved optical appearance and/or improved adhesion properties. These and other objectives have been solved by the present invention.

It has been found by the present inventors that the embossing pattern of the standard PVB films used for laminated glass is not pressed into the obscuration area when the latter is facing one of the surfaces of the glass sheets of the laminate.

However, as pointed out above, a direct contact of the glass surface with the ink of the obscuration area leads to inferior adhesion properties. This issue can surprisingly be overcome by using a thin coating or film comprising the binder which is contained in the ink and/or a polyurethane, which is often used as binder in common printing inks, to cover the obscuration area, avoiding both the adhesion as well as the optical issues described above.

Now therefore, the present invention concerns a thermoplastic interlayer for laminated glass comprising,
- a film A comprising a polyvinyl acetal and optionally a plasticiser in an amount of less than 10 wt%,
- a film B comprising a polyvinyl acetal and at least one plasticiser in an amount of at least 22 wt%,
wherein film A comprises at least on one surface an obscuration area provided by printing or coating said surface with an ink comprising at least one colorant and at least one binder, and
wherein a film or coating A1 comprising a binder and/or a polyurethane, and optionally a plasticiser, is applied to the surface of the obscuration area, and wherein the opposite surface of film A not comprising the obscuration area is facing film B.

An ink is a gel, sol, or solution that contains at least one colorant, such as a dye or pigment dissolved or dispersed in at least one binder (sometimes also called *"*vehicle*"* or *"*solvent*"*).

Inks can be complex mixtures, composed of binders, pigments, dyes, resins, lubricants, solubilizers, surfactants, particulate matter, fluorescents, and other materials.

As pigments, preferably carbon black, iron oxides, mixed oxides of copper and chrome, polyaniline, perylenes or spinel pigments are used.

The pigments may be dispersed in a carrier fluid like water, alcohol or mixtures of alcohol and water, which usually evaporate after the printing/coating process.

*"*Binders*"* is intended to denote a polymer chosen from the list consisting of the following polymers: polyvinyl alcohol, polyvinylpyrrolidone, polyacrylate, polyurethane, poly styrene-acrylate or a mixture thereof. In the context of the present invention, polyvinyl acetals and specifically polyvinyl butyral shall not be included in the definition of *"*binder*"* used for the film A1 but may well be present in the ink as such.

Preferably, the ink comprises at least one colorant and a polyurethane as a binder.

The film or coating A1 can be applied to the whole surface of film A or to parts of the surface area only. Preferably, it shall at least extend over the whole obscuration area. Additionally, it may or may not extend over any area of film A which is not covered by the obscuration area.

The amount of plasticizer shall refer to the amount present in the films *"*prior to lamination*"*, i.e. referring to the state of the films prior to having any contact to each other. In other words, *"*prior to lamination*"* refers to the state for the layers or films before combining them either in the lamination process of the laminated glass or prior to building a stack from the layers used for lamination.

The term *"*obscuration area*"* refers to any part of the film A having a light transmission in the visible spectrum, i.e. from 380 to 750 nm, of less than 5%. In a variant, the obscuration area may fade out towards transparency. In such variants, at least a part of the obscuration area of the laminate has a light transmission in the visible spectrum of less than 5%.

In the laminated glass according to the invention, the transparent areas of the obscuration area may be provided with optical detection devices positioned at or on one surface of a glass sheet. Optical detection devices are digital cameras, range finders, haze meters, rain sensors, target detectors, scanning laser devices (LIDAR) or related devices using electromagnetic radiation from within the UV/VIS and NIR/IR range of the spectrum. In case optical detection devices are present, the obscuration area shall have at least one transparent area embedded in the obscuration to allow the device to observe the outside through such transparent areas.

The printing inks can be applied via techniques that are commonly known in the printing industry such as offset printing, rotogravure printing, flexography, and screen-printing, followed usually by a drying step.

The obscuration area can be completely opaque and/or in part interrupted and/or have a transition area from a completely opaque edge into the non-printed transparent area. Interrupted printing may be achieved in form of dotted patterns.

The thickness of film A in the starting state prior to lamination is 10 - 250 µm, preferably 15 - 100 µm, more preferably 20 - 75 µm, and most preferably 25 - 50 µm. This range of thickness does not include additional printing layer / coating layer on the films.

Film A is produced separately from film B (for example extruded or solvent casted) and has either no plasticizer at all or sufficiently small proportion of plasticizer so that subsequent functionalization and processing is not adversely affected.

The film or coating A1 can be applied to film A using any process known to the skilled person. Film A1 can be produced separately, e.g. by solvent casting or extrusion, and subsequently combined with film A. Alternatively, a coating A1 can be obtained by coating film A including the surface of the obscuration area with a solution of a binder present in the ink and/or a polyurethane, optionally together with a complexation agent and/or a plasticizer, in a suitable organic solvent and subsequent drying. Preferably, the film or coating A1 has a thickness of 1 to 20 µm.

Preferably, the film or coating A1 further comprises at least one complexation agent. More preferably, the at least one complexation agent comprises an amino and/or a silane functionality.

Preferred silanes are trialkoxysilanes, more preferably trimethoxysilanes.

Preferred aminosilanes include glycidyl-oxypropyl-trimethoxysilanes, most preferably aminopropyltriethoxysilane. Especially preferred silanes according to the invention are Silquest^{®} A187^{™} and A1110^{™} silane available from Momentive Performance Materials.

Other preferred complexation agents are chosen from the list consisting of alkyl, aryl, alkoxy-alkyl or aryloxy-alkyl phosphate esters, alkyl or aryl (poly)amines, polyallylamines, polyethyleneimines, alkyl or aryl sulfates, mono-, di-, tri- or tetraalkoxysilanes, alkyl or aryl phosphites, alkyl or aryl sulfates, alkyl or aryl sulphonates, EDTA as well as its salts and alkyl esters; and inorganic oxides with large specific surfaces such as titanium dioxide or silicon dioxide.

Most preferably, the complexation agent is an aminosilane, an epoxysilane or a polyethylenimine.

Preferably, the complexation agent is present in film or coating A1 in an amount of 0.1 to 5 % by weight, more preferably, in an amount of 0.5 to 2.5 % by weight, most preferably in an amount of 0.75 to 1.5 % by weight.

Film B may be any plasticized PVB-film known in the art. Plasticizer-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticizer.

Film A and/or film or coating A1 used in accordance with the invention may contain, in the starting state prior to lamination, less than 22 % by weight (such as 21.9 % by weight), less than 18 % by weight less than 16 % by weight, less than 12 % by weight, less than 8 % by weight, less than 4 % by weight, less than 2 % by weight, less than 1 % by weight or even no plasticizer (0.0 % by weight). In a preferred embodiment of the invention, film A and/or film or coating A1 preferably contain 0.0 - 8 % by weight of plasticizer, most preferred 0 - 4 % by weight.

Examples of suitable plasticizers include one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticizers are organic liquids having a high boiling point. For this reason, further types of organic liquids having a boiling point above 120 °C can also be used as plasticizer.

The film and/or coating used in accordance with the invention contain polyvinyl acetals, which can be produced by acetalization of polyvinyl alcohol or ethylene vinyl alcohol copolymer.

In particular, the aldehydes used for the production of the polyvinyl acetals can be linear or branched (that is to say of the *"*n*"* or *"*iso*"* type) containing 2 to 10 carbon atoms, which leads to corresponding linear or branched acetal groups. The polyvinyl acetals are referred to accordingly as *"*polyvinyl (iso)acetals*"* or *"*polyvinyl (n)acetals*"*. N-butyraldehyde is preferably used and the most preferably polyvinyl acetal is polyvinyl butyral (PVB).

The polyvinyl acetals preferably have a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal used may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

In addition, films A and B may contain further additives, such as residual quantities of water, UV absorber, antioxidants, adhesion regulators such as alkaline and/or earth alkaline metal salts, optical brighteners or fluorescent additives, stabilisers, colorants, processing aids and/or surface active substances.

In another embodiment, the thermoplastic interlayer according to the invention further comprises a functional film C sandwiched between film A and film B. Preferably, the obscuration area is applied to the surface of film A facing functional film C and film or coating A1 is applied to the opposite surface of film A. Also preferably, the obscuration area is applied to the surface of film A facing the glass sheet and film or coating A1 is applied to the surface of film A comprising the obscuration area.

Functional film C preferably comprises a polyamide, a polyester such as polyethylene terephthalate (PET), polybutylene terephthalate (PBT), polyethylen furanoate (PEF) and polyethylene naphthalate (PEN), polyvinyl alcohol (PVA), polylactic acid (PLA), cellulose acetate, polymethyl methacrylates (PMMA), ionomers, or a combination, preferably the functional polymer film C comprises a polyester such as polyethylene terephthalate (PET) and polybutylene terephthalate (PBT).

Functional film C preferably has a thickness of 10 - 1000 um, more preferably 20 - 500 um, yet more preferably 30 um - 200 µm, and most preferably 40 um - 150 um.

*"*Functional*"* shall be intended to denote that the film C bears some kind of additional functionality other than providing adhesion between the two sheets of glass. Accordingly, functional film C may be provided with a heat-shielding function, e.g. by means of a non-metal coating or film or using a metallic film or coating, for example containing silver, gold, indium, aluminium or rhodium. Alternatively, functional film C may contain heat-shielding particles, for example ITO, ATO, AZO, IZO, zinc antimonates, tin-doped zinc oxide, silicon-doped zinc oxide, gallium-doped zinc oxide, tungstates, such as LiWO3, NaWO3, CsWO3, lanthanum hexaboride or cerium hexaboride dispersed therein.

Functional film C may also comprise electrically conductive structures, such as heating wires and antennas, or other layers having optical functions, like an optical combiner for a HUD, or a photovoltaic function or may be decoratively printed.

In another aspect, the present invention relates to a method for the production of a thermoplastic interlayer according to the invention comprising the following steps:
a. providing one surface of a film A with an obscuration area by printing or coating said surface with an ink,
b. providing a film A1 to the surface of film A comprising the obscuration area, and
c. drying the coating obtained in step b to produce the coating A1.

Still another aspect of the present invention concerns a method for the production of a laminated glass according the present invention wherein a film A with the obscuration area and the film or coating A1 is positioned on a first sheet of glass, covered by at least one film B, then covered by a second sheet of glass and then laminated at temperatures over 100 °C.

Alternatively, film A with the obscuration area and the film or coating A1 is positioned on a film B and subsequently laminated between two sheets of glass.

The invention also concerns a laminated glass comprising the thermoplastic interlayer as described above sandwiched by at least two sheets of glass wherein the surface of film A comprising the obscuration area is facing one of the surfaces of one of the glass sheets.

Preferably, the film A1 is in direct contact with a glass surface.

Also preferably, the obscuration area is not in direct contact with a glass surface.

The laminated glass according to invention may be used for windscreens, glass roofs, back-lights and side glazing for cars, busses, trucks, ships or airplanes.

### Examples

### Preparation of film A

Film A was produced using a PVB resin powder (commercial grade Mowital^{®} of Kuraray Europe GmbH) and an aqueous solution of potassium acetate (calculated to give rise to 750 ppm potassium acetate in the film), and 0.073 % (wt) of triethylenglycolbis-3-(3-tert-butyl-4-hydroxy-5-methylphenyl)propionate (CAS: 36443-68-2, commercially available from Songwon as "Songnox^{®} 2450"). The components were first used to prepare a solution in the solvent mixture methanol/ethyl acetate 1:1. The solution was coated on a smooth carrier PET film using a doctor blade in a thickness required to obtain a dry film thickness of 25 µm. The surface roughness Rz of the film was 1 - 2 µm for the top-side and < 1 µm for the bottom side.

### Preparation of the obscuration area

The water-based ink FOLCO AQUAFLEX PREMIUM L 81009 BLACK, commercially available from Follmann GmbH & Co. KG, was applied to the smooth surface of film A by coating using a wire-bare applicator (model: CX 202 from mtv messtechnik oHG) . The thickness of the wet film thickness achieved was 5 µm. The film was dried at room temperature in a ventilated fume hood for 24 h.

### Preparation of a coating A1

The polyurethan dispersion EA1100224 FOLCO AQUAFLEX PREMIUM L X00047 BINDER 4667, commercially available from Follmann GmbH & Co. KG, was applied to the surface of film A comprising the obscuration area including the surface of the obscuration area by coating using a wire-bare applicator (model: CX 202 from mtv messtechnik oHG) . The thickness of the wet film thickness achieved was 5 µm. The film was dried at room temperature in a ventilated fume hood for 24 h.

### Preparation of Test Laminates

A commercially available polyvinyl butyral film B (TROSIFOL^{®} V220 LE2 0.84 mm from Kuraray Europe GmbH) was conditioned for 20 hours at climate of 23 °C / 28 % RH prior to producing test laminates. Test laminates were obtained by combining thin clear glass (2 x Planiclear^{®} 2.1 mm) cleaned with deionized water (< 5 pS) on a flat glass-washing machine in the following lay-up order:

### Comparative Example 1 (no obscuration area):_

top glass (air side) | film A | film B | (tin side) bottom glass

### Comparative Example 2 (with obscuration area, no coating A1):

top glass (air side) | obscuration area, i.e. ink facing the glass surface | film A | film B | (tin side) bottom glass

### Example 1 (according to the invention):

top glass (air side) | coating A1 (polyurethane) | obscuration area | film A | film B | (tin side) bottom glass

The size of these laminates was 30 cm x 30 cm. The sandwiches thus prepared were placed in vacuum bags in an oven at 120 °C for 30 min to produce pre-laminates. Lamination was then accomplished by using an autoclave with industry-standard conditions (90 min total; comprising 30 min hold time at 140 °C and 12 bar).

### Adhesion Test

A *"*pummel test*"* was used to test the adhesion of the interlayer films to the glass. This test is an industry standard to test adhesion of laminated glass described in the literature. Pummel values were determined as described in WO 03/033583 A1.

Results for the pummel value between the top glass and the films A, B, and C respectively:

| | |
|---|---|
| Comparative Example 1 | 5 |
| Comparative Example 2 | 0 |
| Example 3 | 9 |

Thus, the results show that the ink present in the obscuration area completely abolishes the adhesion of the interlayer to the glass surface, leading to a pummel value of 0. Supplying a coating (A1) to the surface of the obscuration area and thereby *"*masking*"* the ink leads to an excellent improvement in the adhesion (pummel value of 9). Surprisingly, the pummel value achieved with the polyurethane coating even clearly exceed the value of the system without any obscuration area.

## Claims

1. A thermoplastic interlayer for laminated glass comprising,
- a film A comprising a polyvinyl acetal and optionally a plasticiser in an amount of less than 10 wt%,
- a film B comprising a polyvinyl acetal and at least one plasticiser in an amount of at least 22 wt%,
wherein film A comprises at least on one surface an obscuration area provided by printing or coating said surface with an ink comprising at least one colorant and at least one binder, and wherein a film or coating A1 comprising a binder and/or a polyurethane, and optionally a plasticiser, is applied to the surface of the obscuration area, and wherein the opposite surface of film A not comprising the obscuration area is facing film B.

2. The thermoplastic interlayer according to claim 1 wherein the ink comprises at least one colorant and a polyurethane as the binder and the film or coating A1 comprises polyurethane.

3. The thermoplastic interlayer according to claim 1 or 2, wherein film A comprises no added plasticizer.

4. The thermoplastic interlayer according to any one of the claims above wherein the film or coating A1 further comprises at least one complexation agent.

5. The thermoplastic interlayer according to any one of the claims above wherein the at least one complexation agent comprises an amino and/or a silane functionality.

6. The thermoplastic interlayer according to any one of the claims above wherein the film or coating A1 has a thickness of 1 to 20 µm.

7. The thermoplastic interlayer according to any one of the claims above wherein all polyvinyl acetals are polyvinyl butyral.

8. The thermoplastic interlayer according to any one of the claims above further comprising a functional film C sandwiched between film A and film B.

9. The thermoplastic interlayer according to any one of the claims above wherein the film B has a wedge-shaped thickness profile.

10. A laminated glass comprising the thermoplastic interlayer according to any one of claims 1 to 9 sandwiched by at least two sheets of glass wherein the surface of film A comprising the obscuration area is facing one of the surfaces of one of the glass sheets.

11. The laminated glass according to claim 10 wherein the film A1 is in direct contact with a glass surface.

12. The laminated glass according to claims 10 or 11 wherein the obscuration area is not in direct contact with a glass surface.
